# EUROPEAN PATENT APPLICATION

(11) **EP 3 892 348 A1**
(43) Date of publication of application: **13.10.2021**
(21) Application number: 21167550.9
(22) Date of filing: 09.04.2021
(51) Int. Cl.: B01D 3/42, C02F 1/04, B01D 1/00

(54) **METHOD AND SYSTEM FOR TREATING WASTE LIQUIDS**

(30) Priority: 09.04.2020 IT 202000007630
(71) Applicant: LMG Green S.r.l., 41121 Modena (IT)
(72) Inventor: GIGLIOLI, Marco, 42124 REGGIO EMILIA (IT)
(74) Representative: Monelli, Alberto

(57) **Abstract**

A method for treating waste liquids, comprising the steps of:
- heating the waste liquids so as to generate vapours, said vapours being of a first type or of a second type, said vapours of the first type deriving from the evaporation of water present in the waste liquids, said vapours of the second type deriving from the evaporation of the waste liquids containing polluting substances;
- acquiring an identification parameter of the vapours generated;
- comparing the acquired parameter with a range of predefined values so as to establish whether they are vapours of the first or of the second type;
- if the vapours generated are of the first type, enabling the passage towards a first tank;
- if the vapours generated are of the second type, enabling the passage towards a second tank for pollutants intended to be disposed of;
- condensing the vapours of the first or second type.

## Description

The object of the present invention is a method and a system for treating waste liquids. The field of application of the present invention relates to the treatment of industrial waste waters coming from process residues such as paints, coolants, products used in screen printing, etc.

Currently, the industries that produce process waters can proceed in two different ways: disposal through certified companies, with costs that are increasing day by day, or the treatment of waste water for obtaining separation from pollutants.

Among the most commonly used industrial systems there are flocculation units, chemical/physical systems which through chemical reactants aggregate the pollutant in flakes and separate it through filtration. For example, powdered additives such as polyelectrolytes are added. This implies additional costs.

Another type of system used is evaporators, systems which through high vacuum distillation (depression) separate the water from the pollutant through the condensation of water vapours. Having to work under vacuum conditions, such systems never reach sterilisation temperatures.

The main problem affecting the systems described above is the fact that the waters obtained through such treatments do not possess the necessary requirements to be disposed of in the drain networks. Therefore, even if they are separated from the main pollutants, they maintain substances within them, mainly hydrocarbons, which make their disposal compulsory.

Furthermore, it is not possible to intervene during the process for performing any interceptions and/or separations.

There is a known type of process which enables the treatment of waste waters with satisfactory results, i.e. osmosis. However, such microfiltration has a very low yield - for every 10 litres of water treated with osmosis 2 litres of water are produced that can go into the drains and 8 litres of waste. Furthermore, such treatment can only be used if the pollutant is present in a percentage of less than 20%.

In this context, the technical task underpinning the present invention is that of proposing a method and a system for treating waste liquids, which obviate the drawbacks of the prior art cited above.

In particular, it is an object of the present invention to propose a method and a system for treating waste liquids, which enable water to be obtained with microbiological and chemical/physical characteristics suitable for disposal in the drain network or for reuse, without any constraints connected to the percentage of pollutants present.

The set technical task and the specified aims are substantially attained by a method and system for treating waste liquids, comprising the technical characteristics set out in one or more of the appended claims.

Further characteristics and advantages of the present invention will become more apparent from the approximate and thus non-limiting description of a preferred, but not exclusive, embodiment of a method and a system for treating waste liquids, as illustrated in the accompanying drawings, in which:

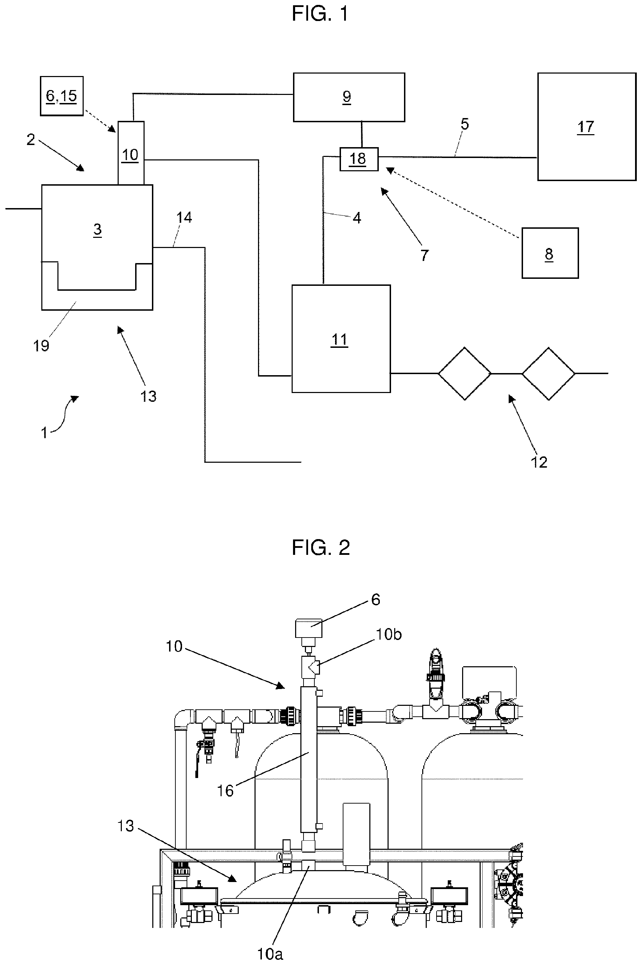

- figure 1 shows a schematic view of a system for treating waste liquids, according to the present invention;
- figure 2 shows a front view of a detail (column) of the system of figure 1.

With reference to the figures, number 1 indicates a system for treating waste liquids.

In particular, waste liquids mean so-called waste waters, i.e. waters used within industrial processes which are made unsuitable to be introduced into the drain network or to be reused due to pollutants collected during said processes. More specifically, the waste waters are comprised of water and pollutants. The latter are substantially of two types: pollutants in the form of solid or semi-solid particles, e.g. residues of paint, and pollutants in the form of solvents, such as hydrocarbons.

The system 1 comprises a means 2 for heating said waste liquids. In particular, the waste liquids are contained in a heating compartment 3 so as to be heated and made to evaporate. Such heating implies the generation of vapours of a first or a second type. The vapours of the first type derive from the evaporation of the water present in the waste liquids; the vapours of the second type derive from the evaporation of the pollutant substances. In particular, the vapours of the second type derive from the evaporation of solvents, e.g. hydrocarbons, present in the waste liquids.

In the embodiment described and illustrated herein, the heating means 2 comprises an evaporator 13. For example, the evaporator 13 is a boiler. The heating compartment 3 is located in the evaporator 13. Preferably, the evaporator 13 also comprises a jacket 19 in which a heating fluid flows for heating the waste liquids through heat exchange. Preferably, the jacket 19 extends at least in part around the heating compartment 3. Preferably, the heating fluid is diathermic oil. Preferably, the pressure inside the heating compartment 3 is greater than or equal to atmospheric pressure. In particular, the pressure is around atmospheric pressure. For example, the pressure does not exceed 0.4 bar.

In this way, it is possible to operate under nominal conditions for the evaporation of the components present in the waste liquids. In the case of water, it is known that it substantially evaporates at 100°C under nominal conditions. Operating under these conditions enables sterilised water to be obtained, unlike the known solutions which, operating in depression, obtain the evaporation of water at temperatures lower than the nominal one.

The system 1 comprises a first channel 4 and a second channel 5, respectively for the vapours of the first and of the second type. Such channels 4,5 are arranged downstream of the heating means 2 and are selectively communicating therewith.

The selective communication between the channels 4,5 and the heating means 2 takes place through an enabling means 7. Preferably, the enabling means 7 comprises at least one exchange valve 18, advantageously a two-way one. Preferably, said valve 18 is a solenoid valve.

The system 1 comprises an acquisition means 6 for acquiring an identification parameter that enables a distinction between the vapours of the first and of the second type.

In the embodiment described and illustrated herein, the acquisition means 6 comprises a first temperature sensor 15 advantageously placed downstream or at the heating means 2. Appropriately, the first sensor 15 is located inside the first evaporator 13 and acts on the vapours generated to detect the temperature thereof. In this case, the identification parameter is the temperature of the vapours generated.

In particular, the water and pollutants present in the waste liquids have different nominal evaporation temperatures. Therefore, as a function of the temperature detected by the first sensor 15, it is possible to identify the type of vapours.

In particular, the first sensor 15 is configured to detect the temperature of the vapours in a specific zone of the heating means 2.

The system 1 comprises a comparison means 8 for comparing the parameter with a predefined range of values for controlling the enabling means 7 so as to enable the correct channel 4,5 as a function of the type of vapours generated.

For example, the comparison means 8 is arranged inside a control unit.

In particular, the comparison means 8 controls the enabling means 7 so that:
- if the parameter is within the range, it enables communication between the first channel 4 and the heating means 2;
- if the parameter is outside the range, it enables communication between the second channel 5 and the heating means 2.

In the event in which the identification parameter is the temperature of the vapours generated, known as T1 the evaporation temperature of the water at pressure p1, the predefined range of values preferably varies by ± 1 °C with respect to T1. More preferably, the range of values varies by 0.5°C with respect to T1.

For example, considering a substantially atmospheric pressure condition, water evaporates at the temperature of substantially 100°C. Therefore, the range set varies from 99°C to 101°C. More preferably, the range varies from 99.5°C to 100.5°C.

In fact, the pollutants in the form of solvents present in waste liquids have evaporation temperatures which, under nominal conditions, are less than or greater than a predefined range.

Preferably, the system 1 comprises a second temperature sensor acting on the heating fluid. The comparison means 8 controls the heating means 2 so as to regulate the temperature of the heating fluid as a function of the temperature of the vapours acquired by the first sensor.

In fact, should the temperature of the heating fluid be too high, the vapours generated would have a high vorticity which can be identified by sudden temperature changes read by the first sensor. In that case, the comparison means 8 controls the heating means 2 so as to lower the temperature of the heating fluid.

Preferably, the heating means 2 comprises a column 10 crossed by the vapours generated inside the heating compartment 3. The column 10 comprises an inlet section 10a communicating with the heating compartment 3 and an outlet section 10b selectively communicating with the two channels 4,5.

Preferably, the first sensor 15 is arranged at the outlet section 10b for detecting the temperature of the vapours transiting in this zone.

Preferably, the column 10 comprises a jacket 16 through which a cooling fluid flows in order to partially cool the vapours generated. In fact, if in the waste liquids there are any pollutants in the form of solid or semi-solid particles, so-called residues, these residues are drawn by the vapours with the evaporation. By generating a heat shock in the vapours by means of partial cooling, these drawn residues are precipitated.

Preferably, a coil is arranged inside the jacket 16, shaped so that the precipitation of the residues takes place, but not the condensation of the vapours.

Preferably, the heating means 2 comprises an outlet 14 for the precipitated residues. Preferably, such outlet 14 is arranged in the evaporator 13.

In the embodiment described and illustrated herein, the system 1 comprises a condenser 9 interposed between the heating means 2 and the two channels 4,5. Preferably, the condenser is of the air type. In particular, the condenser 9 is in fluid communication with the column 10. The exchange valve 18 between the first and the second channel 4,5 is placed downstream of the condenser 9. In this way, both the vapours of the first type and the vapours of the second type are condensed by the condenser 9. Subsequently, the condensation products are sorted into the correct channel 4,5 by the valve based on the command received from the comparison means 8.

Preferably, the first channel 4 is connected to the first tank 11. The first tank 11 is intended to contain the water originally present in the waste liquids and now separated from the pollutants.

Preferably, the second channel 5 is connected to a second tank 17. The second tank 17 is intended to contain the waste liquids containing the pollutants, now separated from the water.

In an alternative embodiment, the condenser 9 is arranged downstream of the exchange valve 18. In particular, a condenser 9 is arranged along each of the two channels 4,5.

Preferably, a water filtering system 12 is arranged downstream of the first tank 11, comprising at least one activated charcoal filter and a mixed bed resin filter. In this way, any residual traces of hydrocarbons and minerals, which raise the COD and BOD parameters, are removed.

Preferably, the water contained in the first tank 11 is reused as a column cooling fluid 10.

A method for treating waste liquids, according to the present invention, is described below. Such a method is advantageously implemented by a system 1 having one or more of the features described previously.

Above all, the method comprises the step of heating the waste liquids so as to generate vapours of the first type or of the second type. An identification parameter is acquired that enables a distinction between the vapours of the first and of the second type. Preferably, the temperature of the vapours generated is the identification parameter.

The parameter acquired is compared with a range of predefined values so as to establish whether they are vapours of the first or of the second type. In the event in which the identification parameter is the temperature, if the parameter is within the range, the vapours are of the first type; if the parameter is outside the range, the vapours of the second type (or vice versa according to how the range is defined).

In the event in which the identification parameter is the temperature of the vapours generated, known as T1 the evaporation temperature of the water at pressure p1, the predefined range of values preferably varies by ± 1 °C with respect to T1. More preferably, the range of values varies by 0.5°C with respect to T1.

For example, considering a substantially atmospheric pressure condition, water evaporates at the temperature of substantially 100°C. Therefore, the range set varies from 99°C to 101°C. More preferably, the range varies from 99.5°C to 100.5°C.

Once the type of vapours has been identified, the passage thereof towards a relevant channel 4,5 is enabled.

In particular, if the vapours generated are of the first type, the passage of the vapours towards a first channel 4 is enabled. Preferably, the first channel 4 communicates with a first tank 11.

If, instead, the vapours generated are of the second type, the passage towards a second channel 5 is enabled. Preferably, the second channel 5 communicates with a second tank 17. From the second tank 17, the pollutants are then disposed of.

The method comprises a step of condensing the vapours of the first or second type.

In the embodiment described and illustrated herein, the step of condensing the vapours takes place before the passage of the vapours into the correct channel 4,5.

In an alternative embodiment, the step of condensing the vapours takes place during the passage of the vapours into the respective channel 4,5. Preferably, the step of heating the waste liquids takes place through heat exchange with a heating fluid. The method comprises the step of regulating the temperature of the heating fluid as a function of the temperature of the vapours generated of the first or of the second type. Preferably, the step of heating the waste liquids takes place through heat exchange with a heating fluid and the waste liquids contained in a heating compartment 3. The method comprises the step of regulating the temperature of the heating fluid as a function of the level of waste liquids in the heating compartment 3. In particular, the heating temperature is reduced in proportion to the level of the liquids.

Preferably, the method comprises the step of cooling the vapours generated of the first or second type. Preferably, such step takes place before the step of acquiring an identification parameter.

In fact, if in the waste liquids there are any pollutants in the form of solid or semi-solid particles, so-called residues, these residues are drawn by the vapours with the evaporation. By generating a heat shock in the vapours by means of partial cooling, these drawn residues are precipitated. Preferably, the step of cooling the vapours generated of the first or of the second type takes place by heat exchange with the water recovered from the waste liquids and separated from the pollutants. Preferably, the water is withdrawn from the first tank 11.

Preferably, the flow rate of water for cooling is regulated as a function of the desired temperature drop during the step of cooling the vapours.

Preferably, the step of heating the waste liquids takes place at a pressure greater than or equal to atmospheric pressure. Preferably, the pressure is around atmospheric pressure. Preferably, the pressure does not exceed 0.4 bar. In this way, it is possible to operate under nominal conditions for the evaporation of the components present in the waste liquids. In the case of water, it is known that it evaporates at 100°C in nominal conditions. Operating under these conditions enables sterilised water to be obtained, unlike the known solutions which, operating in depression, obtain the evaporation of water at temperatures lower than the nominal one. From the description provided, the features of the method and system for treating waste liquids according to the present invention are clear, as are the advantages.

In particular, the provision of a control means that enables the correct channel for the type of vapours as a function of their temperature enables water to be separated from the pollutants present as solvents in the waste liquids. Thus, water is obtained at the outlet having characteristics that make it suitable for being disposed of in the drains or reused in industrial processes. In particular, the water obtained through this process is distilled water. In particular, by means of a system or method as described above, given a quantity of waste liquids, it is possible to obtain about 99.6% or 99.7% water.

Furthermore, the provision of the cooling column and the partial cooling imposed on the vapours enables the solid residue pollutants to be separated from the vapours.

Furthermore, the temperature regulation of the cooling fluid as a function of the temperature of the vapours generated of the first or second type enables the efficiency of the system or method to be improved. Furthermore, by operating under normal conditions, i.e. at pressures close to atmospheric pressure, even sterilised water is obtained.

Furthermore, the system or method are applicable regardless of the percentage of pollutants present in the waste liquids.

## Claims

1. A method for treating waste liquids, comprising the steps of:
- heating said waste liquids so as to generate vapours, said vapours being of a first type or of a second type, said vapours of the first type deriving from the evaporation of water present in the waste liquids, said vapours of the second type deriving from the evaporation of the waste liquids containing polluting substances;
- acquiring an identification parameter that enables a distinction between the vapours of the first and of the second type;
- comparing the acquired parameter with a range of predefined values so as to establish whether they are vapours of the first or of the second type;
- if the vapours generated are of the first type, enabling the passage towards a first channel (4);
- if the vapours generated are of the second type, enabling the passage towards a second channel (5) in order to be disposed of;
- condensing the vapours of the first or second type.

2. The method according to claim 1, wherein said identification parameter is a temperature of the vapours generated.

3. The method according to claim 2, wherein the step of establishing whether they are vapours of the first or of the second type takes place as follows:
- if the parameter is within the range, the vapours generated are of the first type;
- if the parameter is outside the range, the vapours generated are of the second type.

4. The method according to claim 2 or 3, wherein the step of heating said waste liquids takes place through heat exchange with a heating fluid, said method comprising the step of regulating the temperature of the heating fluid as a function of the temperature of the vapours generated.

5. The method according to claim 4, wherein the step of heating said waste liquids takes place in a heating compartment (3), said step of regulating the heating fluid taking place as a function of the level of waste liquids in the heating compartment (3).

6. The method according to any one of the preceding claims, wherein a part of the polluting substances of the waste liquids is solid or semi-solid particles, said method comprising the step of cooling the vapours generated prior to the step of acquiring a parameter so as to promote the precipitation of said particles from the vapours generated.

7. The method according to any one of the preceding claims, wherein the step of heating said waste liquids takes place at a pressure greater than or equal to atmospheric pressure.

8. A system (1) for treating waste liquids, comprising:
- a heating means (2) for heating said waste liquids, comprising a heating compartment (3) intended to contain said waste liquids so as to heat them and generate vapours of a first type or of a second type, said vapours of the first type deriving from the evaporation of water present in said waste liquids, said vapours of the second type deriving from the evaporation of the waste liquids containing polluting substances;
- a first channel (4) for the vapours of the first type and a second channel (5) for the vapours of the second type selectively communicating with said heating means (3);
- an acquisition means (6) for acquiring an identification parameter that enables a distinction between the vapours of the first and of the second type;
- an enabling means (7) for enabling communication between one of the two channels (4,5) and the heating means (3) for heating said waste liquids;
- a comparison means (8) for comparing said parameter with a predefined range of values for controlling the enabling means (7) so as to enable the correct channel (4,5) as a function of the type of vapours generated.

9. The system (1) according to claim 8, wherein the acquisition means (6) for acquiring a parameter comprises a first temperature sensor acting on the vapours generated, said identification parameter being a temperature of said vapours.

10. The system (1) according to claim 9, wherein said comparison means (8) controls the enabling means (7) so that:
- if the parameter is within the range, it enables communication between the first channel (4) and the heating means (2);
- if the parameter is outside the range, it enables communication between the second channel (5) and the heating means (2).

11. The system (1) according to any one of claims 8 to 10, comprising a condenser (9) interposed between the heating means (2) and said first and second channel (4,5).

12. The system (1) according to any one of the preceding claims 8 to 11, comprising:
- a heating fluid acting on the heating compartment (3);
- a second temperature sensor active on the heating fluid,
said comparison means (8) controlling the heating means (2) so as to regulate the temperature of the heating fluid as a function of the temperature of the vapours acquired by the first sensor.

13. The system (1) according to any one of claims 8 to 12, wherein the heating means (2) comprises a cooling column (10), said first sensor being active on an outlet section (10b) of the column (10) for detecting the temperature of the vapours at the outlet therefrom.
